# EUROPEAN PATENT APPLICATION

(11) **EP 2 554 441 A1**
(43) Date of publication of application: **06.02.2013**
(21) Application number: 11762565.7
(22) Date of filing: 15.03.2011
(51) Int. Cl.: B60S 3/04, B05B 7/04, B08B 3/02

(54) **FLUID MIXTURE SPRAY DEVICE**

(30) Priority: 23.12.2010 JP 2010286800; 31.03.2010 JP 2010081528
(71) Applicant: I.Tac Giken Co., Ltd, Obu-shi, Aichi 474-0046 (JP)
(72) Inventor: TANI, Yoshimichi, Obu-shi Aichi 470-0036 (JP); TAKEDA, Ryutaro, Tokyo 105-0004 (JP)
(74) Representative: Kramer - Barske - Schmidtchen
(86) International application number: PCT/JP2011/055999
(87) International publication number: WO 2011/122325

(57) **Abstract**

To provide a fluid mixture jet apparatus which jets a fluid mixture of air containing fine washing water particles, to be capable of removing dust containing carbon and the like adhering to a coated surface, a fluid mixture jet apparatus (10) includes a two fluid mixing tank (11) in which flowed air (1) and washing water (3A) containing detergent are uniformed in pressure, an air passageway (12) connecting from the two fluid mixing tank (11), a washing water channel (13A), an ejector part (15) to which the air passageway (12) and the washing water channel (13A) are connected, to form the washing water (3A) into fine washing water particles, and an jet nozzle (16) that jets a fluid mixture (5) of the compressed air (1) and the pure water 3 made into fine water particles at high speed, and the fluid mixture (5) containing the pure water 3 made into fine water particles at high speed, to break the pure water (3) made into fine water particles, so as to remove a small amount of residual contaminants from a coated surface.

## Description

### Technical Field

The present invention relates to a fluid mixture jet apparatus, and for example, relates to a fluid mixture jet apparatus which jets a fluid mixture of air and washing water, to be capable of reliably removing residual contaminants adhering to a surface of a vehicle body. In this case, the term "washing water" means plain water or pure water without detergent, or liquid in which water or pure water contains detergent. Further, in the case where it is merely called "water" or "pure water," those mean water and pure water without detergent.

### Background Art

Dirt such as mud or sooty smoke adhering to a coated surface of a vehicle body can be almost completely removed by causing high-pressure water to collide against it. However, the dirt of a small amount of residual contaminants adhering to a coated surface has not been able to be completely removed by merely causing high-pressure water to collide against it. It has become obvious from the results of analysis that most of the residual contaminants are micro particles of mud made of carbon particles or silicon oxide.

In order to remove a small amount of residual contaminants, conventionally, the residual contaminants have been wiped away with manual cleaning equipment, brushes, cloths, sponges, and the like, disclosed in Patent Document 1.

### Conventional Art Document

### Patent Document

Patent Document 1: Japanese Unexamined Utility Model Registration No. 3109888

### Summary of Invention

### Problems to be Solved by the Invention

However, in the case where a vehicle wash is carried out by an automatic vehicle washer, if the vehicle wash is manually carried out by use of manual cleaning equipment, manpower is required, which results in a reduction in workability. Therefore, not only does a vehicle wash time get longer, but also personnel costs are required. Further, by wiping the vehicle with brushes, cloths, sponges, or the like, the vehicle body gets scratched.

Further, the cause for that it is simply impossible to remove fine residual particles of contaminants even by jetting high-pressure water is that, in a state in which fine residual particles of contaminants adhere to a coated surface by Van der Waals force, when high-pressure water is jetted onto the coated surface so as to collide against the coated surface, a "water screen" is generated on the coated surface, and the water flow of the high-pressure water cannot reach the inner side of the "water screen," that is, the high-pressure water cannot break the water screen, which makes it impossible to move the residual particles.

In order to solve this, conventionally, fine solid materials, plastic particles, ice, fine powders such as starch, chemicals, or the like have been mixed into high-pressure water caused to collide against a coated surface, and the high-pressure water has been caused to collide against the coated surface. However, in this method, the coating itself may be broken, and this method has a limit to breaking only a "water screen."

### Means for Solving the Problem

The present invention is to solve the above-described problem, and an object of the present invention is to provide a fluid mixture jet apparatus which is configured to generate fine water particles, to be capable of breaking only a "water screen" without breaking a coated surface.

Therefore, a fluid mixture jet apparatus according to the present invention is configured as follows. That is, in a first aspect of the present invention, a fluid mixture jet apparatus which jets a fluid mixture of air and washing water at high speed and high density, in which an ejector part in which a washing water channel in which the pressurized washing water flows is made confluent with an air passageway in which the compressed air flows, to generate fine washing water particles of the washing water is formed, to jet a fluid mixture in which the compressed air and the washing water made into fine washing water particles are mixed from a nozzle connected to the ejector part.

In a second aspect of the present invention, a fluid mixture jet apparatus which jets a fluid mixture of air and water at high speed and high density, the apparatus includes a two-fluid pressure generating device into which the air and the water are respectively made to flow, to uniform the air and the water in pressure, an air passageway which is connected to the two-fluid pressure generating device, and flows the compressed air out from one side, a water channel which is connected to the two-fluid pressure generating device, and flows pressurized water out from the other side at a percentage lower than the compressed air, an ejector part in which a narrowed portion in which a part of the air passageway is formed to be narrow is provided, and the pressurized water is made to flow into the narrowed portion, to be confluent with the air passageway, thereby granulating the pressurized water into fine water particles, and a nozzle that jets a fluid mixture in which the compressed air and the water made into fine water particles are mixed, outward at high speed.

In a third aspect of the present invention according to the second aspect of the present invention, a ratio of the fluid mixture is within a range of a volume of the compressed air : a volume of the water made into fine water particles = 99:1 to 94:6.

In a fourth aspect of the present invention according to the third aspect of the present invention, the pressurized water flowing in the water channel flows in the same direction as a direction in which the compressed air flows, to be confluent in the ejector part.

In a fifth aspect of the present invention according to the fourth aspect of the present invention, the water is pure water.

In a sixth aspect of the present invention according to the fifth aspect of the present invention, the fluid mixture contains air and liquid in which water contains detergent.

In a seventh aspect of the present invention according to the first aspect or the sixth aspect of the present invention, the fluid mixture jet apparatus is mounted to a vehicle washer for washing a vehicle body, to jet the fluid mixture toward the vehicle body.

In an eighth aspect of the present invention, a fluid mixture jet apparatus which jets a fluid mixture of air and washing water at high speed and high density, the apparatus includes an air passageway through which the compressed air is circulated, a washing water channel through which the pressurized washing water is circulated, an ejector part in which a narrowed portion in which a part of the air passageway is formed to be narrow is provided, and the pressurized washing water is made to flow into the narrowed portion, to be confluent with the air passageway, thereby granulating the pressurized washing water into fine washing water particles, and a nozzle that jets a fluid mixture in which the compressed air and the washing water made into fine washing water particles are mixed, outward at high speed, and a ratio of the fluid mixture is within a range of a volume of the compressed air: a volume of the washing water made into fine washing water particles = 99.9:0.1 to 70:30.

In a ninth aspect of the present invention according to the eighth aspect of the present invention, the washing water is water or liquid in which water contains detergent.

In a tenth aspect of the present invention according to the ninth aspect of the present invention, the detergent contained in the liquid is a surfactant, an alkaline agent, or a chelate agent.

### Advantageous Effects of the Invention

According to the first aspect of the present invention, the fluid mixture jet apparatus is configured to jet the fluid mixture of the air and the washing water at high speed and high density, and the washing water made confluent in the ejector part is to form compressed fine washing water particles, and the washing water made into compressed fine washing water particles is jetted from the nozzle. Therefore, in a case where a jetted object is, for example, a vehicle, the fluid mixture containing the washing water made into fine washing water particles collides against a coated surface of the vehicle, which makes it possible to remove a small amount of residual contaminants adhering to the coated surface of the vehicle.

According to the second aspect of the present invention, the air and the water are made to flow into the two-fluid pressure generating device in which both are uniformed in pressure. The compressed air and the pressurized water uniformed in pressure are respectively sent toward the downstream through the air passageway and the water channel connected to the fluid pressure generating device. The small amount of pressurized water sent through the water channel is made confluent with the large amount of compressed air sent through the air passageway in the ejector part. Because the narrowed portion that the air passageway is formed to be narrow is provided in the ejector part, the flow of the compressed air is accelerated by the narrowed portion, which lowers the pressure of the air to generate negative pressure due to "Bernoulli's principle." When a small amount of pressurized water flows into the negative pressure portion, the pressurized water is diffused into particles in the air, to be made into fine particles so as to flow into the air passageway. Thereby forming a fluid mixture of the compressed air and the water made into fine water particles. This fluid mixture is jetted out toward an external jetted object from the nozzle at high speed and high density.

If this jetted object is, for example, a vehicle, the fluid mixture containing water made into fine water particles collides against the coated surface of the vehicle. At this time, if the fluid mixture collides against the coated surface with a dense portion of an assembled mass of the water made into fine water particles, although a water screen is generated on the coated surface for a moment, the volume of the water is too little to thicken the water screen. Therefore, the water made into fine water particles collides against the water screen immediately after that, thereby breaking the thin water screen, and the water screen is intermittently broken by repeating the action. Then, the fine particles of water directly collide against the residual particles of contaminants, to surpass Van der Waals force by which the residual particles adhere to the coated surface, which makes it possible to remove the residual particles. Thereby, it is possible to remove a small amount of residual contaminants adhering to a coated surface of the vehicle if the jetted object is, for example, a vehicle.

According to the third aspect of the present invention, it is proven by an experimental result that, in the case where a ratio of the fluid mixture is within a range of a volume of the compressed air: a volume of the water made into fine water particles = 99:1 to 94:6, it is possible to effectively wash out a small amount of residual contaminants adhering to, for example, the coated surface of the vehicle.

According to the fourth aspect of the present invention, the pressurized water flowing in the water channel is made to flow in the same direction as the direction of the flow of the compressed air (for example, an elbow-shaped pipe is installed in the ejector part, to guide the water to flow in), thereby it is possible to make a flow of the water made into fine particles in the flow of the air, which makes it easy to jet the fine particles of the water (fine water particles) to the outside.

According to the fifth aspect of the present invention, because the water is pure water, the pure water is in a state in which chainlike linkage of molecules of water, i.e., clusters are fine at the molecule level rather than a state in which substances greater than molecules of water are dissolved, which makes it possible to form extremely fine water particles.

According to the sixth aspect of the present invention, because the fluid mixture contains the air and the liquid in which water contains detergent, it is possible to increase the proportion of the fine liquid particles in the fluid mixture. For example, by increasing the proportion of the liquid, it is made easy to prevent diffusion of the liquid mixture jetted from the nozzle, and therefore, it is possible to distance the position of the jet orifice of the nozzle away from the surface of the jetted object.

According to the seventh aspect of the present invention, if the jetted object onto which the fluid mixture is jetted is a vehicle, the fluid mixture jet apparatus is installed in a vehicle washer, to jet the fluid mixture, thereby it is possible to remove a small amount of residual contaminants adhering to the vehicle.

According to the eighth aspect of the present invention, the fluid mixture is formed by a mixture of air and washing water, and the compressed air and the pressurized washing water are respectively sent toward the downstream through the air passageway and the washing water channel. The small amount of pressurized washing water sent through the washing water channel is made confluent into the large amount of compressed air sent through the air passageway in the ejector part. Because the narrowed portion that the air passageway is formed to be narrow is provided in the ejector part, the flow of the compressed air is accelerated by the narrowed portion, which lowers the pressure of the air to generate negative pressure due to "Bernoulli's principle." When a small amount of the pressurized washing water flows into the negative pressure portion, the pressurized washing water is diffused into particles in the air, to be made into fine particles to flow into the air passageway. Thereby forming a fluid mixture of the compressed air and the washing water made into fine washing water particles. This fluid mixture is jetted out toward an external jetted object from the nozzle at high speed and high density.

If the jetted object is, for example, a vehicle, the fluid mixture containing the washing water made into fine washing water particles collides against a coated surface of the vehicle. At this time, if the fluid mixture collides against the coated surface with a dense portion of an assembled mass of the washing water made into fine washing water particles, although a washing water screen is generated on the coated surface for an instant, the volume of the washing water made into fine washing water particles is too little to thicken the washing water screen, which is also due to the surface tension reduction effect of the detergent. Therefore, the washing water made into fine washing water particles collides against it immediately after that, thereby breaking the thin washing water screen, and the liquid screen is intermittently broken by repeating the action. Then, the fine particles of the washing water directly collide against the residual particles of contaminants, to surpass Van der Waals force by which the residual particles adhere to the coated surface in addition to the washing effect of the detergent, which makes it possible to remove the residual particles. Thereby, it is possible to remove a small amount of residual contaminants adhering to the coated surface of the vehicle if the jetted object is, for example, a vehicle.

At this time, in the case where the washing water is plain water, the fluid mixture is formed by a mixture of air and plain water. If the proportion of the air is high in this fluid mixture, the force that the fluid mixture crashes against the atmosphere to be diffused acts when the fluid mixture is jetted from the nozzle, and therefore, the detergency is liable to degrade at the point distant from the nozzle. Then, it has been necessary to shorten a distance between the nozzle and the jetted object, i.e., the vehicle.

Therefore, the fluid mixture is not composed of air and plain water, but is composed of air and the liquid in which water contains detergent, thereby it is possible to decrease the proportion of the air in the fluid mixture, which makes the fluid mixture hard to diffuse at the time of jetting from the nozzle, and it is possible to distance the nozzle away from the vehicle. Additionally, the ratio in the fluid mixture of the air and the washing water is set within a range of a volume of the compressed air: a volume of the washing water made into fine washing water particles = 99.9:0.1 to 70:30, thereby, it is possible to increase the proportion of the washing water and decrease the proportion of the air in the fluid mixture, which make it possible to distance the nozzle away from the vehicle. In addition, by the new experimental result, it is confirmed that the effect has been achieved even when a volume of the compressed air : a volume of the washing water made into fine washing water particles is 99.9:0.1 to 70:30.

In addition, according to the ninth aspect of the present invention, the washing water may be water, or liquid in which water contains detergent.

According to the tenth aspect of the invention, provided that the detergent contained in the liquid is specifically a surfactant, an alkaline agent, or a chelate agent, it is possible to achieve the effect of the eighth aspect.

### Brief Description of the Drawings

Fig.1 is a flow diagram showing a fluid mixture jet apparatus according to an embodiment of the present invention.
Fig. 2 is an enlarged view showing an ejector part in Fig. 1.
Figs. 3 are diagrams showing other embodiments of jet nozzles.
Figs. 4 are diagrams showing the principle of a pure water producing device.
Fig. 5 is a front view showing a detergent jet treatment process in a vehicle washer.
Fig. 6 is a front view showing a return course of a fluid mixture jet treatment process of the same.
Fig. 7 is a front view showing a drying treatment process of the same.
Fig. 8 is a front view showing a final drying process of the same.
Fig. 9 is an explanatory diagram showing a distance between a nozzle and a surface of a vehicle body.
Fig. 10 is a front view showing a detergent treatment process.
Fig. 11 is a front view showing a pure water treatment process.

### Modes for Carrying Out the Invention

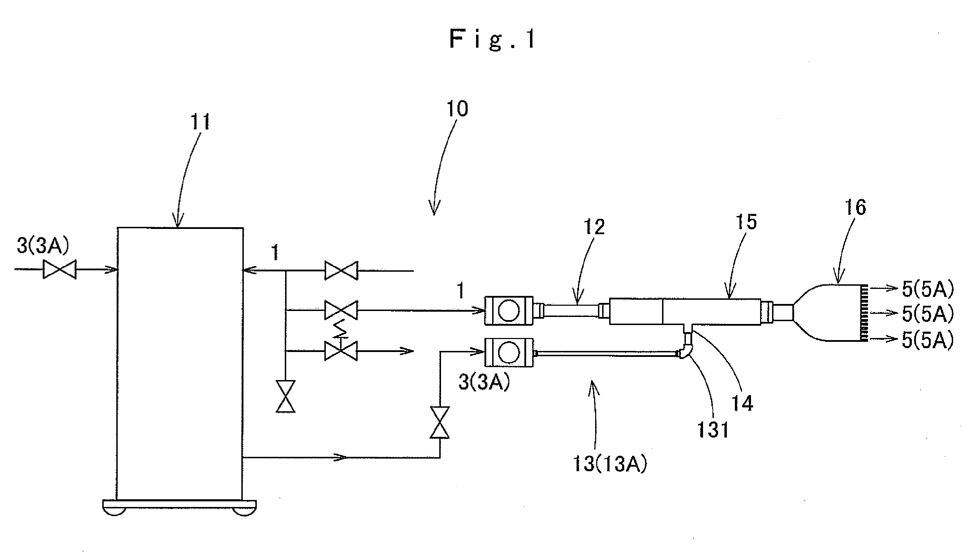

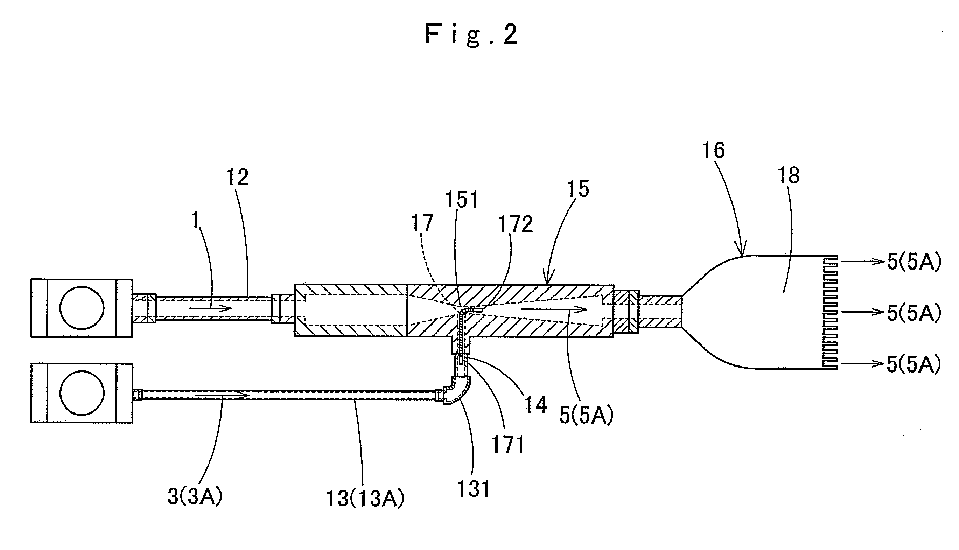

Next, embodiments of a fluid mixture jet apparatus of the present invention will be described on the basis of the drawings. A first embodiment is described such that a fluid mixture 5 jetted from an jet nozzle 16 of Fig. 1 is air 1 and plain water, or the air 1 and pure water 3 produced from plain water. Fig. 1 shows a flow diagram of a fluid mixture jet apparatus 10, and Fig. 2 shows an ejector part 15 in which two fluids of the air 1 and the pure water 3 are made confluent, to generate fine water particles.

As shown in Fig. 1, the fluid mixture jet apparatus 10 is composed of a two-fluid pressure generating device (hereinafter, called a two-fluid confluent tank) 11 into which the air 2 and the pure water 3 are made to flow, to uniform the air 1 and the pure water 3 in pressure, an air passageway 12 which is connected to the two-fluid confluent tank 11, so as to flow the compressed air 1 therein, a water channel 13 which is connected to the two-fluid confluent tank 11, so as to flow the pressurized pure water 3 at a percentage lower than the compressed air 1 therein, the ejector part 15 which connects the air passageway 12 and the water channel 13, and generates fine water particles which are fine particles of the pure water 3, and the jet nozzle 16 which is connected to the ejector part 15.

The pure water 3 flowing into the two-fluid confluent tank 11 is produced by a pure water producing device which will be described later. In the two-fluid confluent tank 11, the air 1 and the pure water 3 are uniformed in pressure, for example at 0.7 MPa to 0.8 MPa, to be flowed out within those pressures.

In the ejector part 15, the air passageway 12 and the water channel 13 are plumbed so as to be substantially-parallel, and an elbow 131 plumbed from the water channel 13 is connected to an inflow port 14 formed in the ejector part 15. As shown in Fig. 2, in the air passageway 12 of the ejector part 15, an L-shaped pipe 17 curved from the inflow port 14 side toward the downstream of the air passageway 12 is buried. The L-shaped pipe 17 is buried at a position at which the center of the pipe is matched to the center of the air passageway 12 in the air passageway 12.

On the other hand, the ejector part 15 forms a narrowed portion 151 on which the air passageway 12 is narrowed down. In addition, an outflow side end 172 of the L-shaped pipe 17 whose inflow side end 171 is disposed on the inflow port 14 side is disposed so as to pass through the inside of the narrowed portion 151. With this, the pure water 3 flowing in the water channel 13 flows toward the narrowed portion 151 at the time of being confluent in the air passageway 12, and flows in the same direction as the flow of the air 1 compressed in the two-fluid confluent tank 11, to be confluent.

By forming the narrowed portion 151, "Bernoulli's principle" is applicable. That is, by the formation of the narrowed portion 151, the flow velocity of the compressed air 1 flowing inside the air passageway 12 is accelerated, to be able to bring the region into negative pressure. By producing negative pressure, the pure water 3 at a percentage lower than the compressed air 1, which flows in the same direction as the compressed air 1 is diffused into particles to be made into fine water particles, so as to flow into the air passageway 12. A large amount of the compressed air 1 and a small amount of the pure water 3 made into fine water particles compose the fluid mixture 5, to flow toward the downstream.

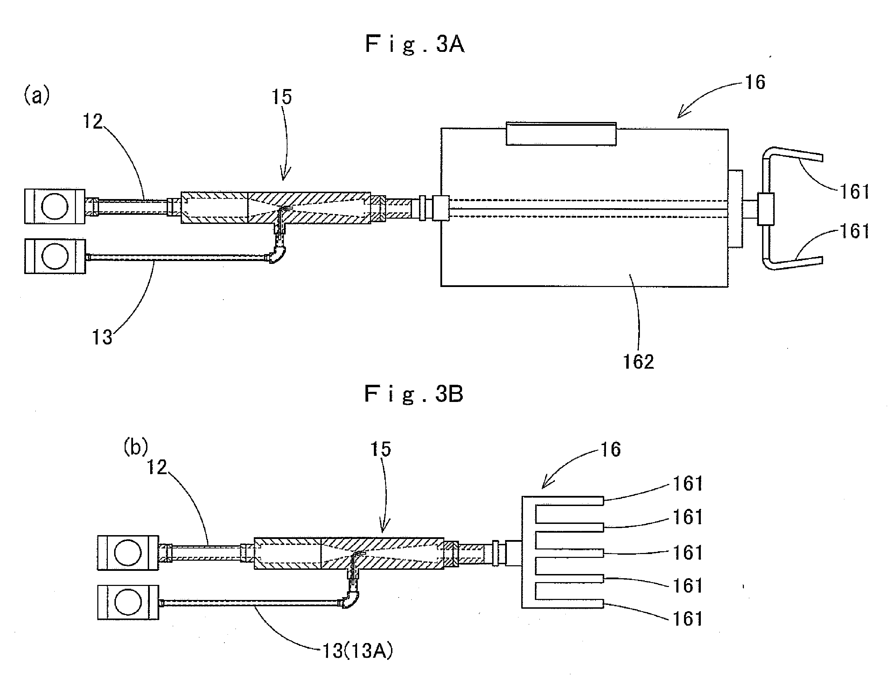

With the jet nozzle 16, in order to cause the fluid mixture 5 to collide against a jetted object, for example, a surface of a vehicle body 42A of a vehicle 42 in a range as wide as possible, as shown in Fig. 2, a tubular attachment 18 with a width wider than the ejector part 15 may be attached to the leading end of the one jet nozzle 16, to be linearly moved. Further, in another mode, as shown in Fig. 3A, the jet nozzle 16 may be configured such that two jet nozzles 161 and 161 are disposed, and the two jet nozzles 161 and 161 are rotated by a motor 162 centering on the tube axis of the air passageway 12. Moreover, the jet nozzle 16 is not limited to this configuration, in another mode, as shown in Fig. 3B, a plurality of (for example five) jet nozzles 16 may be arrayed in line, to be moved in parallel.

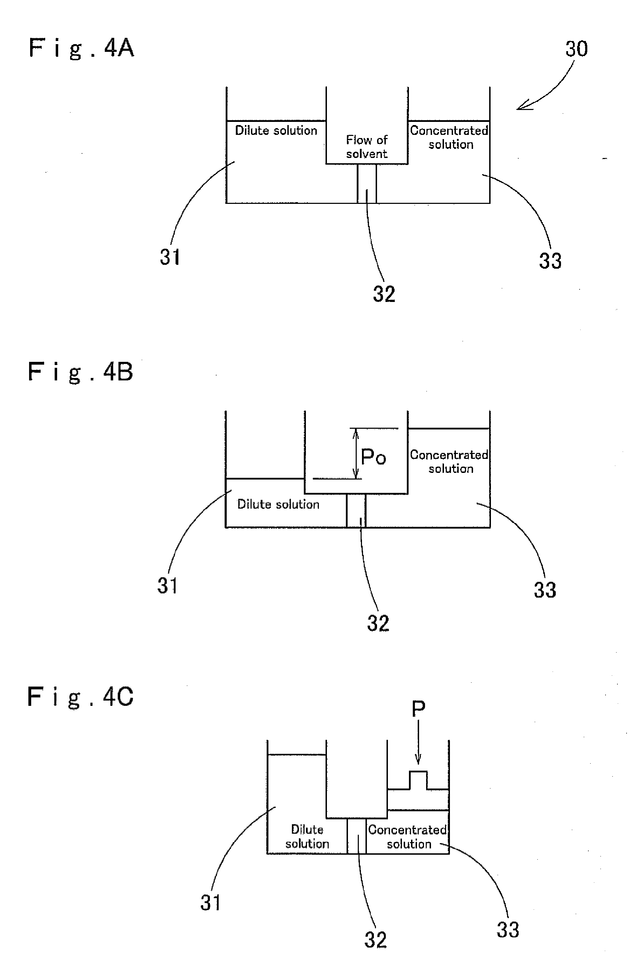

The pure water 3 is, as shown in Figs. 4, produced by a reverse osmosis membrane system pure water producing device (hereinafter, called a reverse osmosis membrane module) 30. This reverse osmosis membrane module 30 produces the pure water 3 by a reverse osmosis membrane method. The reverse osmosis membrane method has, as shown in Fig. 4A, a first tank 31 filled with a dilute solution in low concentration, and a second tank 33 which is disposed so as to provide a semipermeable membrane 32 between it and the first tank 31, and is filled with a concentrated solution in high concentration. Pores slightly greater than water molecules are formed in the semipermeable membrane 32. Usually, when the respective tanks are filled with both solutions, as shown in Fig. 4A, the water molecules in the first tank (dilute solution side) 31 pass through the semipermeable membrane 32 to move to the second tank (concentrated solution side) 33 so as to be at equilibrium of the concentrations. This is called "osmosis." Then, a pressure difference produced between both solutions when the concentrations achieve equilibrium as shown in Fig. 4B is called "osmotic pressure P₀."

In contrast, as shown in Fig. 4C, by applying a forced pressure P greater than the osmotic pressure P₀ to the second tank (concentrated solution side) 33, the water molecules in the second tank (concentrated solution side) 33 move to the first tank (dilute solution side) 31. This is called "reverse osmotic pressure." By this reverse osmotic pressure, only the water molecules move from the second tank (concentrated solution side) 33 to the first tank (dilute solution side) 31. Moreover, the pure water 3 is taken out of the first tank 31, to be reserved in a pressure tank, and is supplied from a pure water supply port to the outside via a delivery pressure reducing valve by the pressure of the pressure tank.

Next, the operation of the fluid mixture jet apparatus 10 configured as described above will be described. The air 1 and the pure water 3 produced in the reverse osmosis membrane module 30 are made to flow into the two-fluid confluent tank 11, and are pressurized to have the same pressure (0.7 MPa to 0.8 MPa), to be flowed out. The air 1 compressed in the two-fluid confluent tank 11 is sent toward the downstream inside the air passageway 12, and the pressurized pure water 3 is sent toward the downstream inside the water channel 13. The pressurized pure water 3 which has passed through the water channel 13 is made confluent with the compressed air 1 in the ejector part 15. At this time, due to the pressurized pure water 3 passing through the inside of the L-shaped pipe 17 in the ejector part 15, the pressurized pure water 3 is made confluent in the air passageway 12 in the same direction as the flow of the compressed air 1.

The compressed air 1 runs into the narrowed portion 151 in the ejector part 15, to be accelerated, which results in a reduction in pressure. With the reduction in pressure, as mentioned above, a negative pressure chamber is formed in the narrowed portion 151, which causes the pure water 3 at a percentage lower than the compressed air 1 to be sent. The small amount of pure water 3 is granulated into fine water particles, to be sent toward the downstream. The compressed air 1 and the pure water 3 made into fine water particles compose the fluid mixture 5, to be jetted toward the outside from the jet nozzle 16.

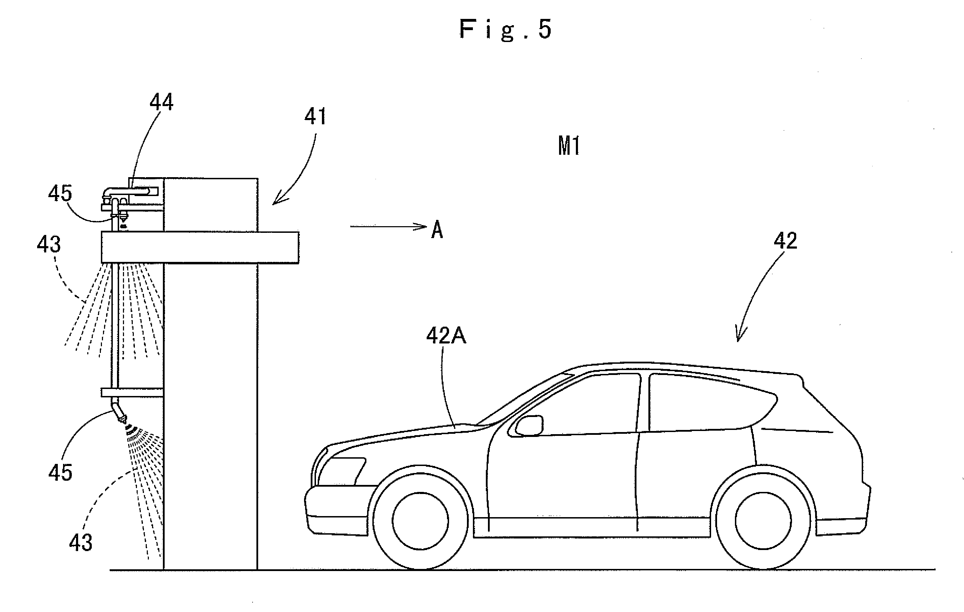

If the jetted object is, for example, the vehicle body 42A of the vehicle 42 as shown in Figs. 5 to 8, the jetted fluid mixture 5 collides against the coated surface of the vehicle body 42A with a dense portion of an assembled mass of pure water 3 made into fine water particles. Although a water screen is generated on the coated surface for an instant, the volume of the water is too little to thicken the water screen. Therefore, the pure water 3 made into fine water particles collides against the jetted object immediately after that, thereby breaking the thin water screen, and the water screen is intermittently broken by repeating the action. Then, the pure water 3 made into fine water particles directly collides against the residual particles of contaminants, to surpass Van der Waals force by which the residual particles adhere to the coated surface of the vehicle body 42A, which makes it possible to remove the residual particles. Thereby, it is possible to remove the small amount of residual contaminants adhering to the coated surface of the vehicle 42.

Next, a vehicle washing method of the first embodiment will be described on the basis of Figs. 5 to 8. The vehicle 42 is brought to a halt at the vehicle washer 41, and the gate type vehicle washer 41 is reciprocated to wash the vehicle. In this vehicle washing method, the vehicle is washed by a contactless vehicle wash which does not require manpower.

As a vehicle washing method of the embodiment for performing the contactless vehicle wash, first, heavy dirt and dust adhering to the vehicle body 42A are removed by jetting high-pressure water 43 containing detergent, and a small amount of residual contaminants adhering to the coated surface is removed by jetting the high-pressure fluid mixture 5 containing the pure water 3 made into fine water particles from the jet nozzle 16. Moreover, the pure water 3 is produced to form fine water particles, which prevents stains generated due to minerals such as calcium salt or magnesium salt contained in tap water being attached thereto. In both processes, because the respective fluids are jetted from the moving vehicle washer 41 toward the vehicle body 42A, manpower and vehicle washing equipment such as rotary brushes are not needed.

Fig. 5 shows a detergent jet treatment process M1 as a first process. The gate type vehicle washer 41 capable of traveling moves on an outward course A so as to stride over the parked vehicle 42. Then, the high-pressure water 43 containing detergent is jetted during the movement. The high-pressure water 43 containing detergent is jetted from a movable spray 45 mounted to the vehicle washer 41 via a detergent channel 44. The high-pressure water 43 containing detergent removes heavy dirt and dust adhering to the vehicle body 42A of the vehicle 42.

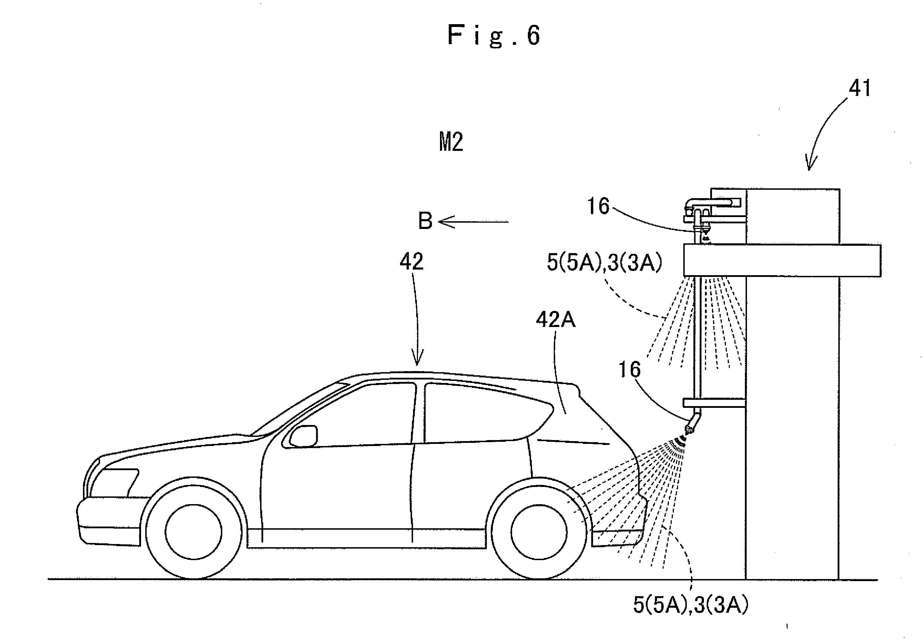

Fig. 6 shows a fluid mixture jet treatment process M2 of jetting the fluid mixture 5 containing the pure water 3 made into fine water particles, as a second process. The vehicle washer 41 jets the fluid mixture 5 onto the vehicle body 42A at high speed while moving on a return course B. The fluid mixture 5 jetted from the jet nozzles 16 disposed above and lateral to the vehicle 42 removes the small amount of residual contaminants adhering to the coated surface of the vehicle body 42A as described above. At this time, the fine water particles are the pure water 3, and because minerals in tap water are removed from the pure water 3 jetted onto the vehicle body 42A at the same time of being made into finer water particles, no stains or the like is caused.

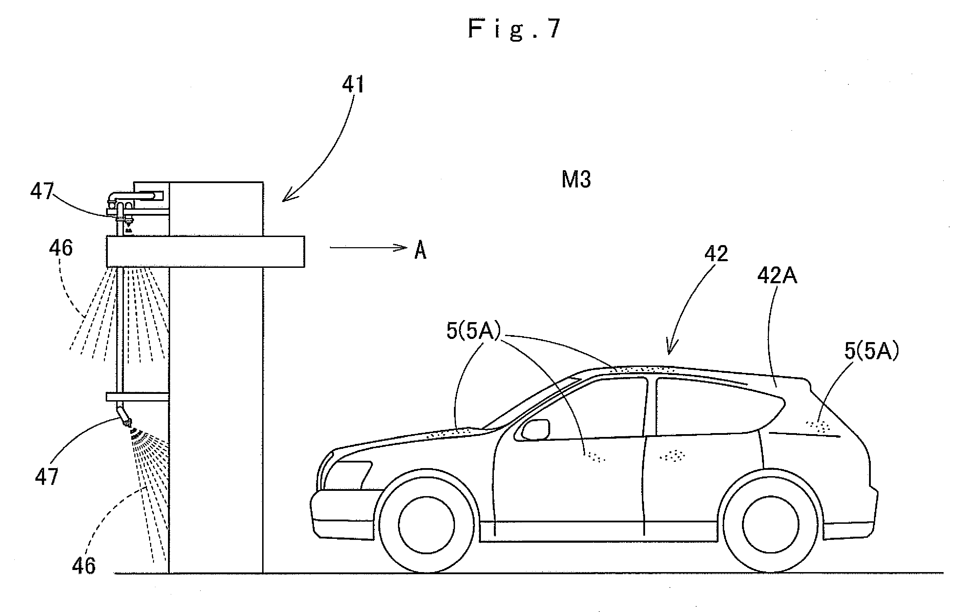

Next, as shown in Fig. 7, the vehicle washer 41 moves on the outward course A, to shift to a drying treatment process M3 as a third process of jetting air 46 onto the vehicle body 42A. The air 46 is jetted onto the entire vehicle body 42A from an air nozzle 47 mounted to the upper portion or the side portion of the vehicle washer 41 so as to be moveable up and down. By jetting the air 46, the pure water 3 of the fluid mixture 5 adhering to the surface of the vehicle body 42A is blown off.

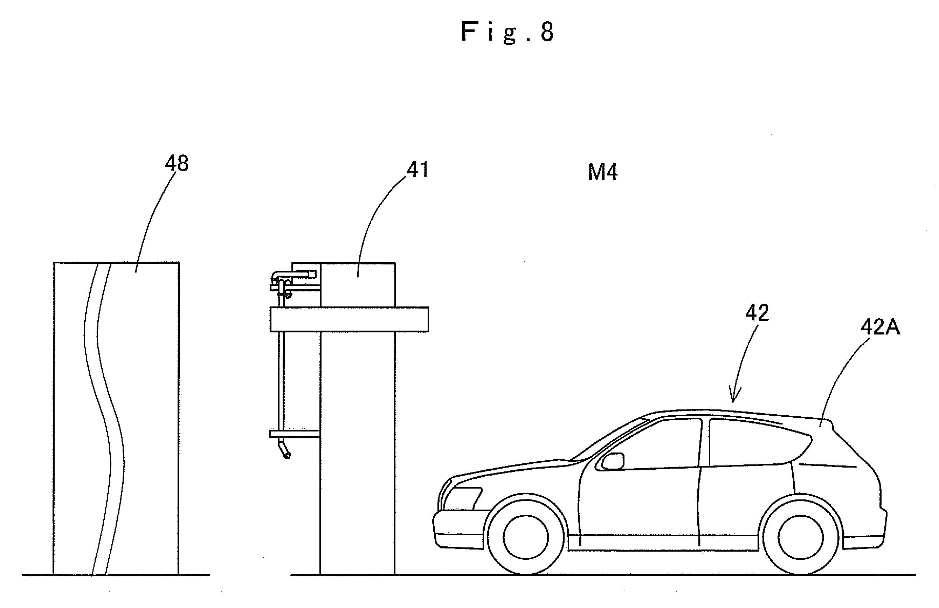

When the vehicle washer 41 returns to the initial position after the completion of the drying treatment process M3, at the end, as shown in Fig. 8, the vehicle washer 41 shifts to a final drying process M4 as a fourth process. In this process, the vehicle 42 passes through the vehicle washer 41 to move into a dry box 48. In the dry box 48, the housed vehicle 42 is dried all over by sending wind by an air blower (not shown), to completely remove the pure water 3 of the fluid mixture 5 which has not been removed in the drying treatment process M3 which is the previous process.

As described above, in the contactless vehicle washing method of the embodiment, in order to remove fine dirt and dust, the fluid mixture 5 containing the pure water 3 made into fine water particles is caused to collide against the vehicle body 42A, to remove dirt and dust adhering to the vehicle body 42A, and it is possible to eliminate a work that a detergent is poured on the vehicle body 42A to be brought into contact with the vehicle body 42A with a rotary brush or the like, which makes it possible to carry out a vehicle wash in a contactless manner. Further, in the other treatment processes, because it is possible to automatically jet a detergent and the air 46, all the treatment processes can be carried out in a contactless manner, that is, it is possible to achieve the completely contactless vehicle wash. Thereby, it is possible to carry out a vehicle wash without worry of damaging the vehicle body 42A and in a short time.

Next, the fluid mixture may be formed of air and washing water in which water contains detergent, and that will be described in a second embodiment as follows.

As described in the section of the Advantageous Effects of the Invention according to the sixth aspect, in the case where the water in the first embodiment is plain water containing no detergent, the fluid mixture is formed by a mixture of air and plain water. Because the proportion of the air is high in this fluid mixture, the force that the fluid mixture crashes against the atmosphere to be diffused acts when the fluid mixture is jetted from the nozzle. When the fluid mixture jetted from the nozzle is diffused, the detergency has tended to degrade unless the orifice of the nozzle is moved closer to the surface of the vehicle body 42A. Therefore, it has been necessary to shorten a distance H between the jet nozzle 16 and the vehicle body 42A.

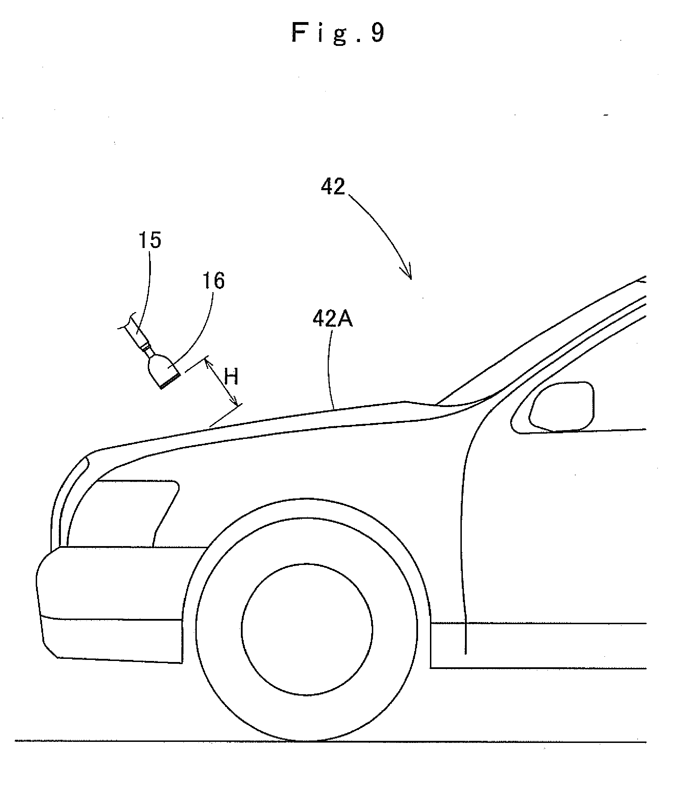

Therefore, as will be described in the second embodiment, a fluid mixture 5A is not a fluid mixture composed of the air 1 and plain water, but is composed of the air 1 and a washing water 3A which is liquid in which water contains detergent, which makes it possible to increase the proportion of the washing water 3A, and decrease the proportion of the air 1 in the fluid mixture 5A. Thereby, making the fluid mixture 5A be hard to diffuse at the time of jetting from the jet nozzle 16, which makes it possible to change the distance H between the jet orifice of the jet nozzle 16 and the surface of the vehicle body 42A of the vehicle 42 so as to be distant by approximately 10 cm as shown in Fig. 9. In addition, by the new experimental result, the effect has been achieved even when a volume of the compressed air (the air 1 compressed in the two-fluid confluent tank 11): a volume of the washing water made into fine washing water particles (the pure water 3 made into fine water particles) is 99.9:0.1 to 70:30 (preferably, 99.1:1 to 94:6).

In addition, the washing water 3A is composed of the pure water 3 containing detergent such as a surfactant, an alkaline agent, or a chelate agent.

Surfactants are an anion surfactant, a cationic surfactant, an ampholytic surfactant, a nonionic surfactant, a fluorochemical surfactant, and the like. Further, alkaline agents are caustic soda, sodium hydrogen carbonate, caustic potash, sodium carbonate, sodium metasilicate, sodium orthosilicate, sodium sesquicarbonate, and the like. Moreover, chelate agents are ethylene diamine tetra acetate (EDTA) 4-acetic acid, L-glutamine acid, aminocarboxylic acid, and the like, and their salts, or organic acid such as malic acid, citric acid, or oxalic acid, and the like, and their salts, and the like. As other detergents, in some cases, an oxygen bleach such as sodium percarbonate or hydrogen peroxide, a chlorine bleach such as sodium hypochlorite, or the like, or enzymes or the like for activation of the respective components, or the like may be added, and for stabilization, alcohols of C1 to C3, ethylene glycol, propylene glycol, glycerin, glycol ether, or the like may be added.

The second embodiment will be described such that the washing water 3A is liquid in which water (the pure water 3) contains detergent. The second embodiment is configured such that the pure water 3 made into fine water particles in the first embodiment is changed to the washing water 3A serving as liquid in which water or the pure water 3 contains detergent. Further, the fluid mixture 5 in the first embodiment is changed to the fluid mixture 5A composed of the air 1 and the washing water 3A serving as liquid in which water contains detergent, and further, the water channel 13 in the first embodiment is changed to a washing water channel 13A, and the components other than the washing water 3A, the fluid mixture 5A, and the washing water channel 13A are the same as those in the first embodiment. Then, the block diagrams shown in Figs. 1 to 4 and descriptions thereof are the same as those in the first embodiment.

Further, the explanation of the distance H between the jet nozzle 16 and the vehicle body 42A is added so as to be shown in Fig. 9, and Figs. 10 and 11 are added as new processes between Figs. 6 and 7 in the operational explanation of the present application.

That is, next, a vehicle washing method of the embodiment will be described as follows on the basis of Figs. 6 to 11. In the second embodiment, the vehicle 42 is brought to a halt at the vehicle washer 41, and the gate type vehicle washer 41 is reciprocated to wash the vehicle. In this vehicle washing method, the vehicle is washed by contactless vehicle wash which does not require manpower.

As a vehicle washing method of the embodiment for performing the contactless vehicle wash, first, heavy dirt and dust adhering to the vehicle body 42A are removed by jetting high-pressure water 43 containing detergent, and a small amount of residual contaminants adhering to the coated surface is removed by jetting the high-pressure fluid mixture 5 containing the washing water 3A made into fine washing water particles from the jet nozzle 16. Moreover, the pure water 3 is produced to form fine water particles, which prevents stains generated due to minerals such as calcium salt or magnesium salt contained in tap water being attached thereto. In both processes, because the respective fluids are jetted from the moving vehicle washer 41 toward the vehicle body 42A, manpower and vehicle washing equipment such as rotary brushes are not needed.

Figs. 5 to 6 are the same as shown in the first embodiment, after the fluid mixture jet treatment process M2 shown in Fig. 6, the washing treatment process M¹ for flowing the detergent, and the pure water treatment process M² are carried out.

Fig. 6 shows the fluid mixture jet treatment process M2 of jetting the fluid mixture 5A containing the washing water 3A made into fine water particles as a second process. The vehicle washer 41 jets the fluid mixture 5 onto the vehicle body 42A at high speed while moving on the return course B. The fluid mixture 5A jetted from the jet nozzles 16 disposed above and lateral to the vehicle 42 removes the small amount of residual contaminants adhering to the coated surface of the vehicle body 42A as described above.

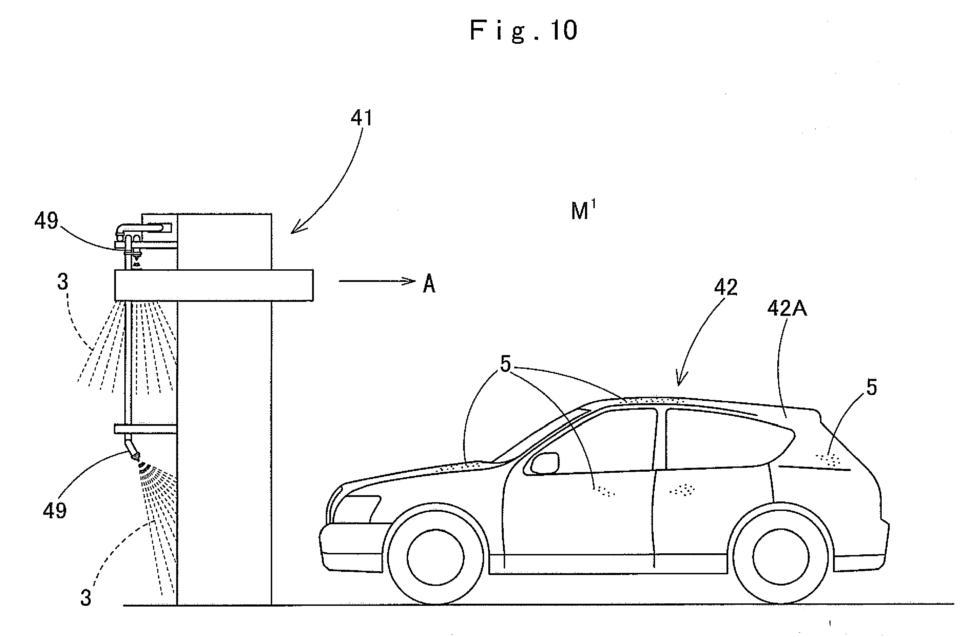

After this, as shown in Fig. 10, as the detergent treatment process M¹, the vehicle washer 41 moves on the outward course A to flush out the detergent adhering to the surface of the vehicle body 42A by jetting water from the nozzle 49.

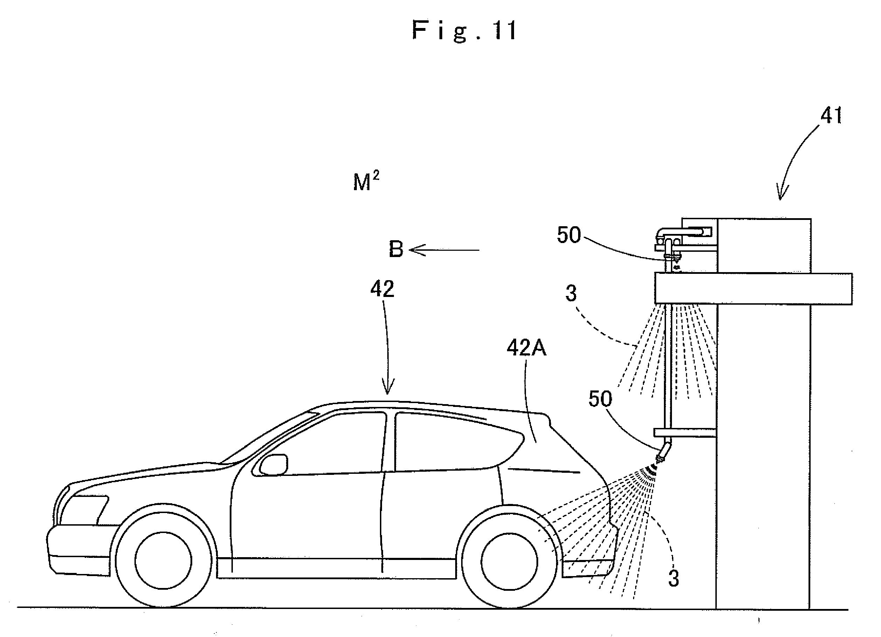

Next, as shown in Fig. 11, as the pure water treatment process M², the vehicle washer 41 moves on the return course B to pour the pure water 3 on the entire vehicle body 42A. Because minerals in tap water are removed from the pure water 3 jetted onto the vehicle body 42A, no stains or the like are caused.

Next, as shown in Fig. 7, the vehicle washer 41 moves on the outward course A, to shift to the drying treatment process M3 as a third process of jetting air 46 onto the vehicle body 42A. The air 46 is jetted onto the entire vehicle body 42A from the air nozzle 47 mounted to the upper portion or the side portion of the vehicle washer 41 so as to be moveable up and down. By jetting the air 46, the water of the fluid mixture 5A adhering to the surface of the vehicle body 42A is blown off.

When the vehicle washer 41 returns to the initial position after the completion of the drying treatment process M3, at the end, as shown in Fig. 8, the vehicle washer 41 shifts to the final drying process M4 as a fourth process. In this process, the vehicle 42 passes through the vehicle washer 41 to move into the dry box 48. In the dry box 48, the housed vehicle 42 is dried all over by sending wind by an air blower (not shown), to completely remove the water of the fluid mixture 5A which has not been removed in the drying treatment process M3 which is the previous process.

As described above, in the contactless vehicle washing method of the embodiment, in order to remove fine dirt and dust, it is possible to remove dirt and dust adhering to the vehicle body 42A by causing the fluid mixture 5A containing the washing water 3A made into fine water particles to collide against the vehicle body 42A, and it is possible to eliminate a work that a detergent is applied to the vehicle body 42A to be brought into contact with the vehicle body 42A with a rotary brush or the like, which makes it possible to carry out a vehicle wash in a contactless manner. Further, in the other treatment processes, because it is possible to automatically jet a detergent and the air, all the treatment processes can be carried out in a contactless manner, that is, it is possible to achieve the completely contactless vehicle wash. Thereby, it is possible to carry out a vehicle wash without worry of damaging the vehicle body 42A and in a short time.

In addition, the fluid mixture jet apparatus of the present invention is not limited to the above-described embodiment. For example, in the ejector part 15, as long as the pure water 3 (water) or the washing water 3A is made confluent along the direction of the flow of the compressed air 1, the L-shaped pipe 17 may not be necessarily buried.

Further, in the above-described contactless vehicle washing method, as long as it is possible to carry out a vehicle wash by jetting the fluid mixture 5 (5A) containing the pure water 3 made into fine water particles (the washing water 3A made into fine washing water particles), the vehicle washer 41 itself is not limited to the above-described embodiment. For example, the respective nozzles and the jet nozzles 16 may be installed in any places and in any states in the vehicle washer 41.

Moreover, the vehicle washer 41 may be not limited to the gate type, and the vehicle washer 41 itself may not move, but the vehicle side may move.

Further, the fluid mixture jet apparatus 10 may not be mounted to the vehicle washer 41, and may be manually jetted toward the vehicle body 42A, and moreover, may be jetted toward a jetted object other than the vehicle body 42A.

### Description of Symbols

1: Air
3: Pure water (water)
3A: Washing water
5: Fluid mixture
5A: Fluid mixture
10: Fluid mixture jet apparatus
11: Two-fluid confluent tank
12: Air passageway
13: Water channel
13A: Washing water channel
15: Ejector part
151: Narrowed portion
16: Jet nozzle
17: L-shaped pipe
42: Vehicle (Jetted object)
42A: Vehicle body

## Claims

1. A fluid mixture jet apparatus which jets a fluid mixture of air and washing water at high speed and high density, wherein
an ejector part in which a washing water channel in which the pressurized washing water flows is made confluent with an air passageway in which the compressed air flows, to generate fine washing water particles of the washing water is formed, to jet a fluid mixture in which the compressed air and the washing water made into fine washing water particles are mixed from a nozzle connected to the ejector part.

2. A fluid mixture jet apparatus which jets a fluid mixture of air and water at high speed and high density, the apparatus comprising:
a two-fluid pressure generating device into which the air and the water are respectively made to flow, to uniform the air and the water in pressure;
an air passageway which is connected to the two-fluid pressure generating device, and flows the compressed air out from one side;
a water channel which is connected to the two-fluid pressure generating device, and flows pressurized water out from the other side at a percentage lower than the compressed air;
an ejector part in which a narrowed portion in which a part of the air passageway is formed to be narrow is provided, and the pressurized water is made to flow into the narrowed portion, to be confluent with the air passageway, thereby granulating the pressurized water into fine water particles; and
a nozzle that jets a fluid mixture in which the compressed air and the water made into fine water particles are mixed, outward at high speed.

3. The fluid mixture jet apparatus according to claim 2, wherein a ratio of the fluid mixture is within a range of a volume of the compressed air : a volume of the water made into fine water particles = 99:1 to 94:6.

4. The fluid mixture jet apparatus according to claim 3, wherein the pressurized water flowing in the water channel flows in a same direction as a direction in which the compressed air flows, to be confluent in the ejector part.

5. The fluid mixture jet apparatus according to claim 4, wherein the water is pure water.

6. The fluid mixture jet apparatus according to claim 5, wherein the fluid mixture contains air and liquid in which water contains detergent.

7. The fluid mixture jet apparatus according to claim 1 or claim 6, the fluid mixture jet apparatus is mounted to a vehicle washer for washing a vehicle body, to jet the fluid mixture toward the vehicle body.

8. A fluid mixture jet apparatus which jets a fluid mixture of air and washing water at high speed and high density, the apparatus comprising:
an air passageway through which the compressed air is circulated;
a washing water channel through which the pressurized washing water is circulated;
an ejector part in which a narrowed portion in which a part of the air passageway is formed to be narrow is provided, and the pressurized washing water is made to flow into the narrowed portion, to be confluent with the air passageway, thereby granulating the pressurized washing water into fine washing water particles; and
a nozzle that jets a fluid mixture in which the compressed air and the washing water made into fine washing water particles are mixed, outward at high speed, wherein
a ratio of the fluid mixture is within a range of a volume of the compressed air : a volume of the washing water made into fine washing water particles = 99.9:0.1 to 70:30.

9. The fluid mixture jet apparatus according to claim 8, wherein the washing water is water or liquid in which water contains detergent.

10. The fluid mixture jet apparatus according to claim 9, wherein the detergent contained in the liquid is a surfactant, an alkaline agent, or a chelate agent.
